# EUROPÄISCHE PATENTSCHRIFT

(11) **EP 3 034 168 B1**
(45) Veröffentlichungstag und Bekanntmachung des Hinweises auf die Patenterteilung: **28.07.2021**
(21) Anmeldenummer: 15195742.0
(22) Anmeldetag: 20.11.2015
(51) Int. Cl.: B01L 1/00, F16B 5/00

(54) **INNENKESSEL EINES SIMULATIONSSCHRANKS UND SIMULATIONSSCHRANK MIT EINEM INNENKESSEL**
INTERNAL BOILER OF A SIMULATION CABINET AND SIMULATION CABINET WITH AN INTERNAL BOILER
CUVE INTERNE D'UNE CHAMBRE DE SIMULATION ET CHAMBRE DE SIMULATION DOTÉE D'UNE CUVE INTERNE

(30) Priorität: 16.12.2014 DE 202014010516 U; 30.09.2015 DE 102015116630
(43) Veröffentlichungstag der Anmeldung: 22.06.2016
(73) Patentinhaber: Binder GmbH, 78532 Tuttlingen (DE)
(72) Erfinder: Demirkaya, Vedat, 63785 Obernburg (DE)
(74) Vertreter: Westphal, Mussgnug & Partner Patentanwälte mbB

(56) Entgegenhaltungen:
- DE-A1- 4 116 500
- DE-A1- 19 941 905
- DE-C- 439 918
- DE-U1-202014 005 166
- US-A- 3 009 582
- US-A- 4 708 252
- US-A1- 2009 195 129

## Beschreibung

Die Erfindung betrifft einen Innenkessel eines Simulationsschrankes und einen Simulationsschrank mit einem solchen Innenkessel.

Simulationsschränke werden in wissenschaftlichen oder industriellen Laboren zur Simulation von biologischen, chemischen und/oder physikalischen Umwelteinflüssen verwendet. Ein Simulationsschrank umfasst einen Innenkessel und ein Gehäuse, wobei der Innenkessel in dem Gehäuse angeordnet und an diesem befestigt ist.

Ein Simulationsschrank als Labor-Wärmeschrank ist beispielsweise aus der DE 4 116 500 A1 bekannt.

Weiteren Stand der Technik bilden DE 439 918 C, DE 199 41 905 A1, US 2009 195 19 A1, DE 20 2014 005 166 U1, US 4 708 252 A, US 3 009 582 A.

Bei den bekannten Simulationsschränken stellt sich das Problem, dass durch eine Befestigung des Innenkessels an dem Gehäuse ein Kontakt zwischen dem Innenkessel und dem Gehäuse entsteht, der die simulierte Umgebung in einem Innenraum des Innenkessels, insbesondere eine Temperaturverteilung, durch auftretende Wärmebrücken beeinträchtigt.

Die Aufgabe der Erfindung besteht daher darin, einen Innenkessel und einen Simulationsschrank jeweils mit einer Befestigung des Innenkessels an einem Gehäuse des Simulationsschrankes bereitzustellen, die einen einfachen Aufbau aufweist und durch die Kontakt zwischen dem Innenkessel und dem Gehäuse möglichst weitgehend vermieden wird.

Die Aufgabe der Erfindung wird gelöst durch einen Innenkessel gemäß dem Patentanspruch 1 und einen Simulationsschrank mit einem solchen Innenkessel mit den Merkmalen des Patentanspruchs 8.

Vorteilhafte Ausgestaltungen und Weiterbildungen der Erfindung sind in den Unteransprüchen angegeben.

Bei dem erfindungsgemäßen Innenkessel eines Simulationsschrankes sind an dem Innenkessel wenigstens zwei hakenförmige Befestigungselemente zum Befestigen an einem Gehäuse des Simulationsschrankes angeordnet. Hakenförmige Befestigungselemente stellen ein besonders einfaches Mittel dar, den Innenkessel an dem Gehäuse des Simulationsschrankes zu befestigen. Eine hakenförmige Befestigung kann vorteilhafterweise einfach hergestellt und bei Bedarf wieder gelöst werden, nämlich einfach durch Einhaken und Aushaken des hakenförmigen Befestigungselements. Es sind insbesondere keine weiteren Befestigungsmittel erforderlich, um den Innenkessel an dem Gehäuse zu befestigen. Beispielsweise können Schrauben oder Nieten entfallen. Damit kann die Anzahl möglicher Wärmebrücken gering gehalten werden.

An dem Innenkessel ist wenigstens ein Blechstreifen mit einer ersten Längskante und einer zweiten Längskante jeweils im Wesentlichen parallel zu einer Längsachse des Blechstreifens angeordnet, wobei der Blechstreifen wenigstens eine, vorzugsweise mehrere, je eines der hakenförmigen Befestigungselemente bildende Aussparung aufweist. Ein derartiger Blechstreifen ist besonders einfach und kostengünstig herzustellen, beispielsweise kann ein Blechstreifen bestimmter Länge einfach von einem Blechcoil abgerollt und abgeschnitten werden. Die Aussparung kann an dem Blechstreifen relativ einfach, beispielsweise durch Stanzen, realisiert werden. Damit wird eine einfach zu realisierende Möglichkeit bereitgestellt, hakenförmige Befestigungselemente zu erzeugen.

Der Blechstreifen ist bevorzugt in einem Winkel an dem Innenkessel angeordnet ist, wobei vorzugsweise die zweite Längskante des Blechstreifens an dem Innenkessel angeordnet ist und besonders vorzugsweise der Winkel im Wesentlichen 90° beträgt. Durch eine derartige Anordnung kann das hakenförmige Befestigungselement besonders einfach in ein korrespondierendes Gegenstück eingesetzt werden.

Vorteilhafterweise sind der Blechstreifen an einer ersten Seitenwand des Innenkessels und ein weiterer Blechstreifen an einer der ersten Seitenwand gegenüberliegenden zweiten Seitenwand des Innenkessels angeordnet. Durch zwei an jeweils gegenüberliegenden Seitenwänden des Innenkessels angeordnete Blechstreifen kann der Innenkessel an beiden Seiten an einem Gehäuse eines Simulationsschrankes befestigt werden, womit eine besonders stabile Befestigung erzielt werden kann. Des Weiteren kann der Innenkessel selbsttragend an dem Gehäuse mit einer hohen Eigensteifigkeit befestigt werden.

Gemäß einer bevorzugten Ausgestaltung der Erfindung weist die erste Längskante einen durch die Aussparung gebildeten Hinterschnitt auf. Hier und im Folgenden wird mit dem Begriff "Hinterschnitt" eine Aussparung eines Körpers bezeichnet, durch die ein Teil des Körpers frei an dem übrigen Körper hervorsteht. Beim Befestigen eines Befestigungselementes mit einem Hinterschnitt greift ein zu dem Befestigungselement korrespondierendes Gegenstück in den Hinterschnitt ein. Der Hinterschnitt ist eine besonders einfache und vorteilhafte Möglichkeit, ein hakenförmiges Befestigungselement zu erzeugen.

Die Aussparung weist eine Berandung auf mit wenigstens einer ersten Berandungsseite mit einem ersten Ende und einem zweiten Ende, einer zweiten Berandungsseite mit einem ersten Ende und einem zweiten Ende, einer dritten Berandungsseite mit einem ersten Ende und einem zweiten Ende, wobei das erste Ende der ersten Berandungsseite an der ersten Längskante des Blechstreifens angeordnet ist und die erste Berandungsseite in einem ersten Winkel, welcher kleiner oder gleich 90° ist zu der ersten Längskante angeordnet ist, das erste Ende der zweiten Berandungsseite an dem zweiten Ende der ersten Berandungsseite angeordnet ist und die zweite Berandungsseite in einem zweiten Winkel, welcher kleiner als 180° ist, zu der ersten Berandungsseite, vorzugsweise im Wesentlichen senkrecht zu der Längsachse des Blechstreifen, angeordnet ist, und das erste Ende der dritten Berandungsseite an dem zweiten Ende der zweiten Berandungsseite angeordnet ist und das zweite Ende der dritten Berandungsseite an der ersten Längskante angeordnet ist. Das zweite Ende der dritten Berandungsseite ist dabei insbesondere an der ersten Längskante in einem Punkt angeordnet, der verschieden ist von einem Punkt des ersten Endes der ersten Berandungsseite. Bei Herstellung der hakenförmigen Verbindung zwischen dem hakenförmigen Befestigungselement und dem dazu korrespondierenden Einhakelement können durch eine derartig angeordnete erste Berandungsseite Kontaktflächen zwischen dem hakenförmigen Befestigungselement und dem Einhakelement und damit mögliche Wärmebrücken reduziert werden. Die zweite Berandungsseite kann eine Auflagefläche für ein Einhakelement beim Herstellen der hakenförmigen Verbindung bereitstellen.

Die dritte Berandungsseite weist wenigstens einen ersten Abschnitt mit einem ersten Ende und einem zweiten Ende und einen zweiten Abschnitt mit einem ersten Ende und einem zweiten Ende auf, wobei das erste Ende des ersten Abschnitts an dem zweiten Ende der zweiten Berandungsseite angeordnet ist, das zweite Ende des zweiten Abschnitts an der ersten Längskante angeordnet ist, und der erste Abschnitt in einem Winkel, welcher kleiner als 180° ist, zu dem zweiten Abschnitt angeordnet ist. Mit dem ersten Abschnitt und dem zweiten Abschnitt kann eine Geometrie der Aussparung auf einen bestimmten Verwendungseinsatz angepasst werden. Insbesondere kann der zweite Abschnitt von dem ersten Abschnitt abgebogen in Richtung auf die erste Längskante angeordnet sein.

Vorzugsweise weist die dritte Berandungsseite einen dritten Abschnitt mit einem ersten Ende und einem zweiten Ende auf, wobei das erste Ende des dritten Abschnitts an dem zweiten Ende des ersten Abschnitts angeordnet ist und das zweite Ende des dritten Abschnitts an dem ersten Ende des zweiten Abschnitts angeordnet ist, wobei vorzugsweise der dritte Abschnitt der dritten Berandungsseite im Wesentlichen parallel zur Längsachse des Blechstreifens angeordnet ist. Der dritte Abschnitt ist also zwischen dem ersten Abschnitt und dem zweiten Abschnitt angeordnet. Der dritte Abschnitt stellt eine weitere Möglichkeit dar, die Geometrie der Aussparung zu ändern. Insbesondere für den Fall, dass der dritte Abschnitt im Wesentlichen parallel zur Längsachse des Blechstreifens angeordnet ist, kann eine Längenausdehnung der Aussparung parallel zur Längsachse des Blechstreifens abhängig von einer Länge des dritten Abschnitts variiert werden.

Die erste Berandungsseite weist vorteilhafterweise wenigstens einen ersten Abschnitt mit einem ersten Ende und einem zweiten Ende und einen zweiten Abschnitt mit einem ersten Ende und einem zweiten Ende auf, wobei das erste Ende des ersten Abschnitts an der ersten Längskante des Blechstreifens angeordnet ist und das zweite Ende des ersten Abschnitts an dem ersten Ende des zweiten Abschnitts angeordnet ist, das zweite Ende des zweiten Abschnitts an dem ersten Ende der zweiten Berandungsseite angeordnet ist, und der erste Abschnitt in einem Winkel, welcher kleiner als 180° ist, zu dem zweiten Abschnitt angeordnet ist. Vorzugsweise ist der erste Abschnitt der ersten Berandungsseite senkrecht zu der Längsachse des Blechstreifens angeordnet. Mit dem ersten Abschnitt und dem zweiten Abschnitt der ersten Berandungsseite kann eine Ausgestaltung des Hinterschnitts variiert werden und insbesondere die Stabilität des freien Endes des hakenförmigen Befestigungselements erhöht werden.

Vorzugsweise weist die erste Berandungsseite einen dritten Abschnitt mit einem ersten Ende und einem zweiten Ende auf, wobei das erste Ende des dritten Abschnitts an dem zweiten Ende des ersten Abschnitts angeordnet ist und das zweite Ende des dritten Abschnitts an dem ersten Ende des zweiten Abschnitts angeordnet ist, wobei vorzugsweise der dritte Abschnitt der ersten Berandungsseite im Wesentlichen parallel zur Längsachse des Blechstreifens angeordnet ist. Der dritte Abschnitt ist also zwischen dem ersten Abschnitt und dem zweiten Abschnitt angeordnet. Insbesondere kann der dritte Abschnitt parallel zu der Längsachse des Blechstreifens verlaufen.

Die hakenförmigen Befestigungselemente sind vorteilhafterweise aus einem Blechstreifen ausgestanzt. Mittels Ausstanzen kann die das hakenförmige Befestigungselement bildende Aussparung besonders einfach, kostengünstig und schnell hergestellt werden.

Der erfindungsgemäße Simulationsschrank, aufweisend einen Innenkessel wie vorangehend beschrieben und ein Gehäuse, zeichnet sich dadurch aus, dass das Gehäuse Einhakelemente aufweist, in welche die hakenförmigen Befestigungselemente einhakbar sind. Dabei weisen die Einhakelemente eine zu den hakenförmigen Befestigungselementen vorzugsweise korrespondierende Form auf. Das Zusammenspiel von hakenförmigen Befestigungselementen und dazu korrespondierenden Einhakelementen stellt ein besonders einfaches Konzept zur Befestigung eines Innenkessels an einem Gehäuse eines Simulationsschrankes dar. Durch die hakenförmige Befestigung kann der Innenkessel schwimmend in dem Gehäuse des Simulationsschranks gelagert werden, womit eine einfache Montage des Innenkessels an dem Gehäuse bereitgestellt wird.

Vorzugsweise ist an dem Gehäuse wenigstens ein Blechstreifen mit einer ersten Längskante und einer zweiten Längskante jeweils im Wesentlichen parallel zu einer Längsachse des Blechstreifens angeordnet, wobei der Blechstreifen wenigstens einen, vorzugsweise mehrere, je eines der Einhakelemente bildenden Vorsprung aufweist. Durch den Vorsprung wird ein Einhakelement realisiert, wobei der Vorsprung in die Aussparung des hakenförmigen Befestigungselements eingreifen kann.

Der Blechstreifen ist vorteilhafterweise in einem Winkel an dem Gehäuse angeordnet ist, wobei vorzugsweise die zweite Längskante des Blechstreifens an dem Gehäuse angeordnet ist und besonders vorzugsweise der Winkel im Wesentlichen 90° beträgt. Durch eine derartige Anordnung kann, insbesondere wenn das hakenförmige Befestigungselement ebenfalls in einem Winkel an dem Innenkessel angeordnet ist, eine hakenförmige Verbindung besonders einfach hergestellt werden.

Vorteilhafterweise sind der Blechstreifen an einer ersten Seitenwand des Gehäuses und ein weiterer Blechstreifen an einer der ersten Seitenwand gegenüberliegenden zweiten Seitenwand des Gehäuses angeordnet. Der Innenkessel kann damit an zwei gegenüberliegenden Seitenwänden des Gehäuses befestigt werden, wodurch sich eine besonders stabile Befestigung des Innenkessels an dem Gehäuse ergibt.

Gemäß einer bevorzugten Ausgestaltung der Erfindung weist die erste Längskante einen durch den Vorsprung gebildeten Hinterschnitt auf. Der Hinterschnitt der Einhakelemente kann beim Befestigen des Innenkessels an dem Gehäuse in den Hinterschnitt der hakenförmigen Befestigungselemente, der durch die Aussparung gebildet ist, eingreifen und somit eine besonders einfache Befestigungsmöglichkeit bereitstellen.

In einer bevorzugten Ausgestaltung der Erfindung weist der der Vorsprung eine Berandung auf mit wenigstens: einer ersten Berandungsseite mit einem ersten Ende und einem zweiten Ende, und einer zweiten Berandungsseite mit einem ersten Ende und einem zweiten Ende, wobei das erste Ende der ersten Berandungsseite an der ersten Längskante des Blechstreifens angeordnet ist und die erste Berandungsseite in einem ersten Winkel, welcher kleiner als oder gleich 90° ist, zu der ersten Längskante angeordnet ist, und das erste Ende der zweiten Berandungsseite an dem zweiten Ende der ersten Berandungsseite angeordnet ist und das zweite Ende der zweiten Berandungsseite an der ersten Längskante angeordnet ist. Das zweite Ende der zweiten Berandungsseite ist dabei insbesondere an der Längskante des Blechstreifens in einem Punkt angeordnet, der verschieden ist von einem Punkt, in dem das erste Ende der ersten Berandungsseite an der Längskante angeordnet ist. Bei Herstellung der hakenförmigen Verbindung zwischen dem hakenförmigen Befestigungselement und dem dazu korrespondierenden Einhakelement können durch eine derartig angeordnete erste Berandungsseite Kontaktflächen zwischen dem hakenförmigen Befestigungselement und dem Einhakelement und damit mögliche Wärmebrücken reduziert werden. Durch das Anordnen der ersten Berandungsseite in einem spitzen Winkel zur ersten Längskante kann eine Einführschräge gebildet werden.

Die erste Berandungsseite weist vorteilhafterweise wenigstens einen ersten Abschnitt mit einem ersten Ende und einem zweiten Ende, und einen zweiten Abschnitt mit einem ersten Ende und einem zweiten Ende auf, wobei das erste Ende des ersten Abschnitts an der ersten Längskante des Blechstreifens angeordnet ist und das zweite Ende des ersten Abschnitts an dem ersten Ende des zweiten Abschnitts angeordnet ist, wobei der erste Abschnitt vorzugsweise senkrecht zu der Längskante des Blechstreifens angeordnet ist, das zweite Ende des zweiten Abschnitts an dem ersten Ende der zweiten Berandungsseite angeordnet ist, und der erste Abschnitt in einem Winkel, welcher kleiner als 180° ist, zu dem zweiten Abschnitt angeordnet ist. Der erste Abschnitt kann insbesondere eine Auflagefläche für das hakenförmige Befestigungselement beim Herstellen der hakenförmigen Verbindung bereitstellen. Der zweite Abschnitt kann eine Einführschräge für das einzuhakende hakenförmige Befestigungselement bilden

Vorzugsweise weist die erste Berandungsseite einen dritten Abschnitt mit einem ersten Ende und einem zweiten Ende auf, wobei das erste Ende des dritten Abschnitts an dem zweiten Ende des ersten Abschnitts angeordnet ist und das zweite Ende des dritten Abschnitts an dem ersten Ende des zweiten Abschnitts angeordnet ist, wobei vorzugsweise der dritte Abschnitt der ersten Berandungsseite im Wesentlichen parallel zur Längsachse des Blechstreifens angeordnet ist. Der dritte Abschnitt ist also zwischen dem ersten Abschnitt und dem zweiten Abschnitt der ersten Berandungsseite angeordnet. Mit dem dritten Abschnitt kann eine seitliche Stabilisierung eines eingehakten hakenförmigen Befestigungselements erreicht werden.

Die zweite Berandungsseite weist vorteilhafterweise wenigstens einen ersten Abschnitt mit einem ersten Ende und einem zweiten Ende, und einen zweiten Abschnitt mit einem ersten Ende und einem zweiten Ende auf, wobei das erste Ende des ersten Abschnitts an dem ersten Ende der zweiten Berandungsseite angeordnet ist, wobei der erste Abschnitt vorzugsweise parallel zu der Längsachse des Blechstreifens angeordnet ist, das zweite Ende des zweiten Abschnitts an der ersten Längskante angeordnet ist, und der erste Abschnitt in einem Winkel, welcher kleiner als 180° ist, zu dem zweiten Abschnitt angeordnet ist.

Vorzugsweise weist die zweite Berandungsseite einen dritten Abschnitt mit einem ersten Ende und einem zweiten Ende auf, wobei das erste Ende des dritten Abschnitts an dem ersten Ende der zweiten Berandungsseite angeordnet ist und das zweite Ende des dritten Abschnitts an dem ersten Ende des ersten Abschnitts der zweiten Berandungsseite angeordnet ist, wobei vorzugsweise der dritte Abschnitt senkrecht zu der Längsachse des Blechstreifens angeordnet ist. Das erste Ende des dritten Abschnitts ist also das erste Ende der zweiten Berandungsseite und der erste Abschnitt schließt sich an den dritten Abschnitt an. Aufgrund des dritten Abschnitts, der insbesondere senkrecht zu der Längsachse des Blechstreifens angeordnet ist, kann ein Widerstand beim Einsetzen des Innenkessels in das Gehäuse, beispielsweise in Form einer durch den ersten Abschnitt und der ersten Berandungsseite gebildeten Spitze, und damit eine Verletzungsgefahr, vermieden werden.

Grundsätzlich können die Berandungsseiten des Hinterschnitts und/oder der Vorsprünge gerade oder gebogen ausgebildet sein. Die Bereiche, an denen die Berandungsseiten aneinander stoßen, können abgerundet ausgebildet sein.

Vorzugsweise weist das Gehäuse wenigstens ein Einhakelement auf, in welches das hakenförmige Befestigungselement aus einer ersten Richtung einhakbar ist, und wenigstens ein zweites Einhakelement, in welches das hakenförmige Befestigungselement aus einer zu der ersten Richtung entgegengesetzten zweiten Richtung einhakbar ist, wobei insbesondere das erste und das zweite Einhakelement spiegelsymmetrisch zueinander ausgebildet sind.

Nach einer bevorzugten Ausgestaltung der Erfindung ist das Einhakelement derart ausgebildet ist, dass das hakenförmige Befestigungselement aus zwei entgegengesetzten Richtungen in das Einhakelement einhakbar ist, insbesondere, dass das Einhakelement eine zu einer zu der Längsachse des Blechstreifens senkrecht angeordneten Querachse symmetrische Form aufweist.

Diese Ausgestaltungen ermöglichen es, dass die hakenförmigen Befestigungselemente des Innenkessels auch dann in die Einhakelemente des Gehäuses eingreifen können, wenn der Blechstreifen um 180° um die Querachse gedreht ist. Insbesondere kann damit ein Blechstreifen beidseitig an dem Gehäuse verwendet werden.

Die erste Längskante weist vorteilhafterweise wenigstens einen ersten Abschnitt und wenigstens einen zweiten Abschnitt auf, wobei ein Abstand des ersten Abschnitts zu der zweiten Längskante kleiner ist als ein Abstand des zweiten Abschnittes zu der zweiten Längskante, und wobei der Vorsprung an dem zweiten Abschnitt angeordnet ist. Beim Einhaken eines derartigen Einhakelementes mit einem korrespondierenden hakenförmigen Befestigungselement hakt das hakenförmige Befestigungselement im Bereich des zweiten Abschnitts der ersten Längskante ein. Damit kann die Kontaktfläche der Befestigungselemente insgesamt minimiert werden. Eine derartige Minimierung der Kontaktflächen der Befestigungselemente ist besonders vorteilhaft hinsichtlich eines Wärmeverlustes oder eines Übertrags von Kälte.

Vorteilhafterweise sind die Einhakelemente aus einem Blechstreifen ausgestanzt. Mittels Ausstanzen können damit die Einhakelemente besonders einfach, kostengünstig und mit wenig Zeitaufwand hergestellt werden.

Vorzugsweise ist eine Anzahl der Einhakelemente nicht größer als eine Anzahl der hakenförmigen Befestigungselemente, sodass jedes Einhakelement in ein korrespondierendes hakenförmiges Befestigungselement eingreifen kann.

Gemäß einer Weitergestaltung der Erfindung schließt eine Ebene, in der das Einhakelement liegt, mit einer Ebene, in der das hakenförmige Befestigungselement liegt, im eingehakten Zustand von dem hakenförmigen Befestigungselement und dem Einhakelement einen Winkel, vorzugsweise einen Winkel von im Wesentlichen 90°, ein. Dadurch liegen die Einhakelemente und die hakenförmigen Befestigungselemente nicht in einer Ebene, was zusätzlich zur Minimierung der Kontaktfläche zwischen den Einhakelementen und den hakenförmigen Befestigungselementen beiträgt.

Die Erfindung wird anhand der nachfolgenden Figuren ausführlich erläutert. Es zeigen:
- Fig. 1: eine perspektivische Ansicht eines Ausführungsbeispiels eines Simulationsschrankes mit einem Ausführungsbeispiel eines Innenkessels und eines Gehäuse,
- Fig. 2: eine Draufsicht auf eine Seitenwand des Innenkessels gemäß Fig. 1,
- Fig. 3a: ein Ausführungsbeispiel eines hakenförmigen Befestigungselements,
- Fig. 3b: ein weiteres Ausführungsbeispiel eines hakenförmigen Befestigungselementes,
- Fig. 3c: ein weiteres Ausführungsbeispiel eines hakenförmigen Befestigungselementes,
- Fig. 3d: eine Ausschnittvergrößerung aus Figur 2 mit einem weiteren Ausführungsbeispiel eines hakenförmigen Befestigungselementes,
- Fig. 3e: ein weiteres Ausführungsbeispiel eines hakenförmigen Befestigungselementes,
- Fig. 4: ein Ausschnitt aus einer Draufsicht auf eine Innenwand des Gehäuses gemäß Figur 1,
- Fig. 5a: ein Ausführungsbeispiel eines Einhakelements,
- Fig. 5b: ein weiteres Ausführungsbeispiel eines Einhakelementes,
- Fig. 5c: ein weiteres Ausführungsbeispiel eines Einhakelementes,
- Fig. 5d: ein weiteres Ausführungsbeispiel eines Einhakelementes,
- Fig. 5e: ein weiteres Ausführungsbeispiel eines Einhakelementes,
- Fig. 5f: eine Ausschnittvergrößerung aus Figur 4 mit einem weiteren Ausführungsbeispiel eines Einhakelementes und
- Fig. 6: eine Darstellung eines der hakenförmigen Befestigungselemente gemäß Figur 3d und eines der Einhakelemente gemäß Figur 5f vor dem Einhaken des Innenkessels an dem Gehäuse des Simulationsschrankes gemäß Figur 1.

In den einzelnen Figuren bezeichnen gleiche Bezugszeichen gleiche Bezugselemente mit der gleichen Bedeutung. Zur besseren Übersicht werden in den einzelnen Figuren nur die relevanten Bezugselemente mit Bezugszeichen gekennzeichnet.

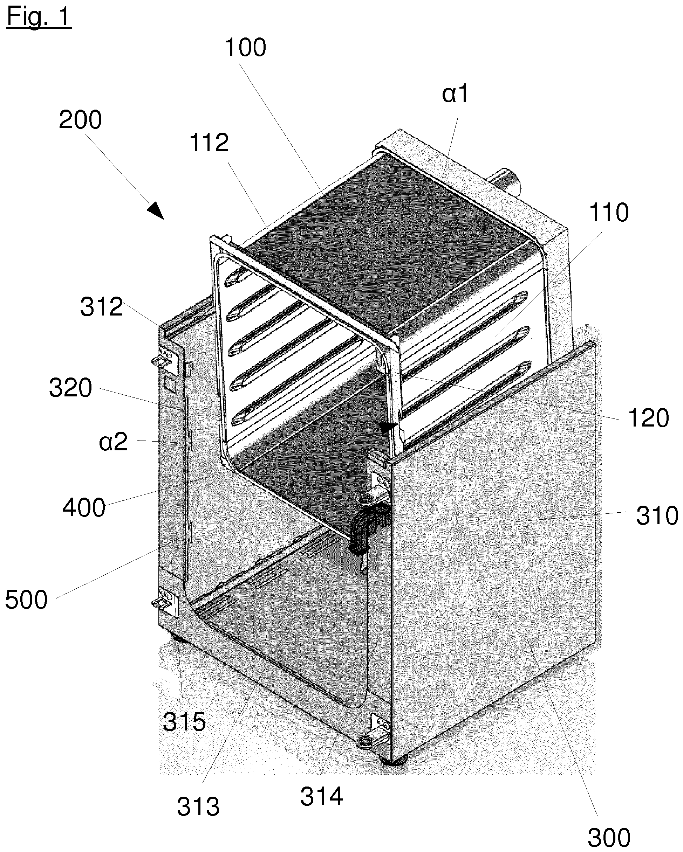

Figur 1 zeigt eine perspektivische Ansicht eines Simulationsschrankes 200, der einen Innenkessel 100 und ein Gehäuse 300 aufweist.

Der Innenkessel 100 kann die Form eines Quaders mit einem Innenraum aufweisen, wobei der Innenkessel 100 von fünf Seitenwänden begrenzt ist, sodass eine Seitenwand des Innenkessels, folgend als Türseite bezeichnet, offen ist.

Das Gehäuse 300 des Simulationsschrankes 200 weist eine Form und Größe auf, die es jeweils erlauben, den Innenkessel 100 in das Gehäuse 300 einzusetzen. An einer Seitenwand des Gehäuses 300 kann ein Türelement zum Öffnen und Schließen des Simulationsschranks 200 angeordnet sein. Der Innenkessel 100 wird derart in das Gehäuse 300 eingesetzt, dass die Türseite des Innenkessels 100 an der Seitenwand des Gehäuses 300 mit dem Türelement angeordnet ist. Bei geöffnetem Türelement ist also durch die Türseite des Innenkessels 100 ein Zugang in einen Innenraum des Innenkessels 100 möglich.

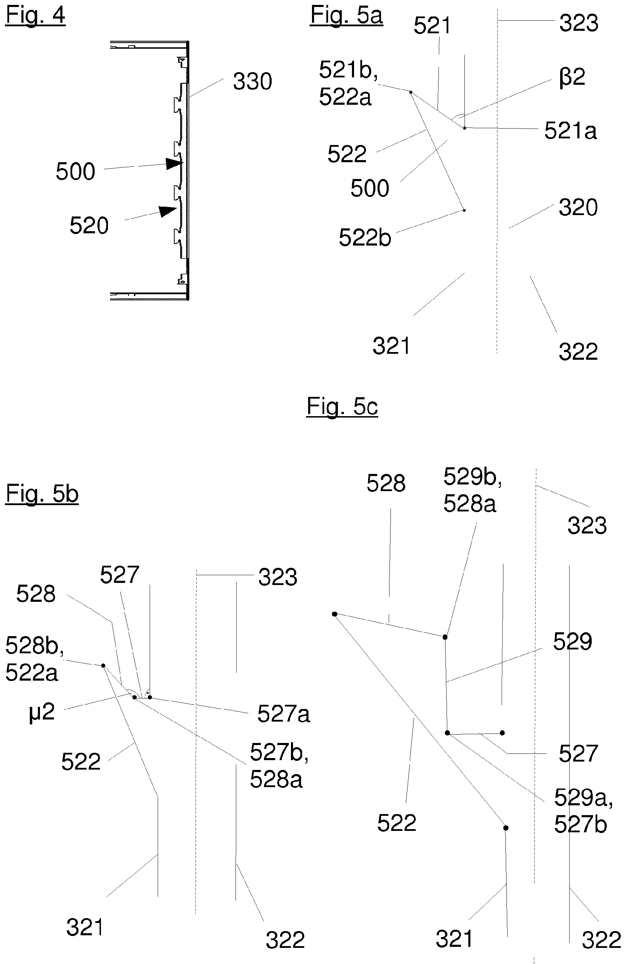

Das Gehäuse 300 ist von fünf Seitenwänden begrenzt. Insbesondere weist das Gehäuse 300 eine erste Seitenwand 310 und eine zu der ersten Seitenwand 310 gegenüberliegend angeordnete zweite Seitenwand 312 auf, zwischen denen im Wesentlichen senkrecht zu der ersten Seitenwand 310 und der zweiten Seitenwand 312 eine dritte Seitenwand 313 mit einem Rahmen für das Türelement angeordnet ist. Der Rahmen weist eine erste Rahmenseite 314 und eine der ersten gegenüberliegend angeordnete zweite Rahmenseite 315, die jeweils parallel zu einer Kante verlaufen, in der die erste Seitenwand 310 bzw. die zweite Seitenwand 312 des Gehäuses 300 mit der dritten Seitenwand 313 zusammenstoßen. An der Rahmenseite 314 ist ein Blechstreifen 330 und an der Rahmenseite 315 ist ein Blechstreifen 320 angeordnet, von denen aufgrund der perspektivischen Darstellung in Figur 1 lediglich der Blechstreifen 320 ersichtlich ist. An jedem der Blechstreifen 320 und 330 sind Einhakelemente 500 angeordnet, in die die jeweiligen hakenförmigen Befestigungselemente 400 beim Befestigen des Innenkessels 100 an dem Gehäuse 300 eingreifen können. Die Einhakelemente 500 sind jeweils auch in den Figuren 4 und 5a bis 5e dargestellt. In Figur 1 ist der Innenkessel 100 noch nicht an dem Gehäuse 300 befestigt.

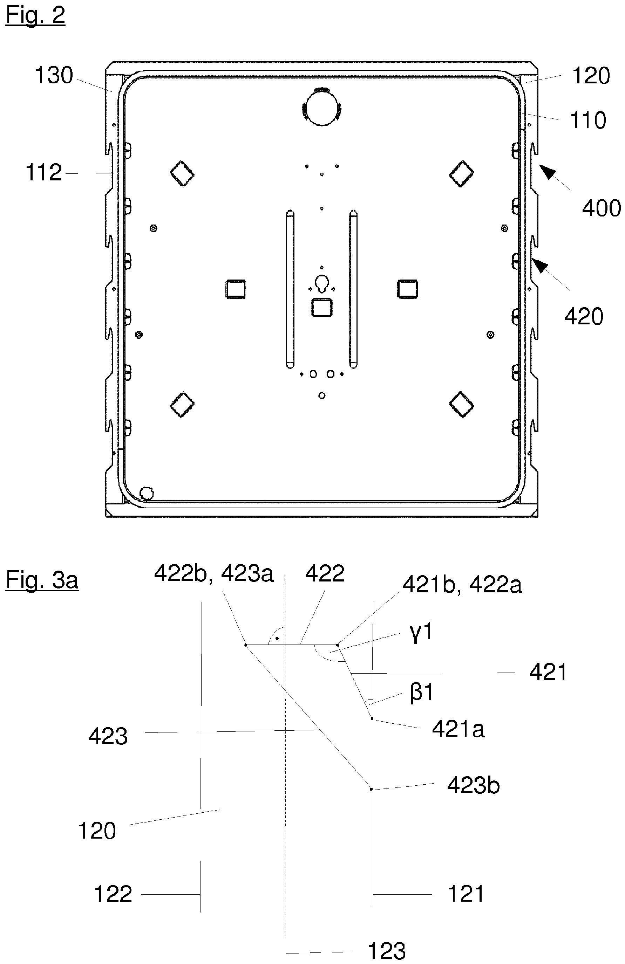

An einer ersten Seitenwand 110 und einer der ersten Seitenwand 110 gegenüberliegenden zweiten Seitenwand 112 des Innenkessels 100 sind jeweils ein Blechstreifen 120 und ein Blechstreifen 130 mit jeweils mehreren, beispielsweise vier, hakenförmigen Befestigungselementen 400 angeordnet, wie aus Figur 2 ersichtlich ist. Dabei ist der Blechstreifen 130 dem Blechstreifen 120 gegenüberliegend angeordnet. Eine Längsachse 123 des Blechstreifens 120, und vorzugsweise auch eine Längsachse 123 des Blechstreifens 130, verläuft parallel zu einer Kante der ersten Seitenwand 110 bzw. der zweiten Seitenwand 112, die jeweils an einer entsprechenden Kante der Türseite des Innenkessels 100 angeordnet ist. Eine Länge der Blechstreifen 120 und 130 kann im Wesentlichen einer Länge dieser Kante entsprechen. Die Blechstreifen 120 und 130 können im Bereich dieser Kante an der ersten Seitenwand 110 bzw. der zweiten Seitenwand 112 des Innenkessels 100 derart angeordnet sein, dass eine zweite Längskante 122 der Blechstreifen 120 und 130 an dem Innenkessel 100 angeordnet ist und der Blechstreifen 120, 130 in einem Winkel α1 zu der Seitenwand 110, 112 angeordnet ist, welcher vorzugsweise 90° beträgt.

Die Anzahl der hakenförmigen Befestigungselemente 400 pro Blechstreifen 120 oder 130 ist variabel. Für eine stabile Befestigung des Innenkessels 100 an dem Gehäuse 300 sind wenigstens zwei hakenförmige Befestigungselemente 400 jeweils an der ersten und zweiten Seitenwand 110 und 112 ausreichend. In den Figuren 3a bis 3e ist jeweils ein Ausschnitt des Blechstreifens 120 gezeigt.

Der Blechstreifen 120 weist zusätzlich zu der zweiten Längskante 122 eine erste Längskante 121 auf. Die zweite Längskante 122 ist parallel zu der Längsachse 123 angeordnet. Die erste Längskante 121 ist zumindest abschnittsweise parallel zu der Längsachse 123 angeordnet. Die erste Längskante 121 ist in Bezug auf die Seitenwand 110 außen angeordnet. Der Blechstreifen 120 weist vier Aussparungen 410 auf, von denen jeweils eine in verschiedenen Ausführungen in den Figur 3a bis 3f gezeigt ist.

Jede der Aussparungen 410 weist eine Berandung 420 auf. Erfindungswesentlich ist, dass die Berandung 420 eine erste Berandungsseite 421, eine zweite Berandungsseite 422 und eine dritte Berandungsseite 423 aufweist, vgl. Fig. 3a. Ein erstes Ende 421a der ersten Berandungsseite 421 ist dabei an der ersten Längskante 121 angeordnet und ein zweites Ende 421b der ersten Berandungsseite 421 ist an einem ersten Ende 422a der zweiten Berandungsseite 422 angeordnet. Die erste Berandungsseite 421 ist zu der ersten Längskante 121 in einem ersten Winkel β1 angeordnet und die zweite Berandungsseite 422 ist zu der ersten Berandungsseite 421 in einem zweiten Winkel γ1 angeordnet, wobei der zweite Winkel γ1 vorzugsweisederart bemessen ist, dass die zweite Berandungsseite 422 im Wesentlichen senkrecht zur Längsachse 123 des Blechstreifens 120 angeordnet ist. Ein zweites Ende 422b der zweiten Berandungsseite 422 ist an einem ersten Ende 423a der dritten Berandungsseite 423 angeordnet. Ein zweites Ende 423b der dritten Berandungsseite 423 ist an der ersten Längskante 121 angeordnet, und zwar insbesondere in einem Punkt, der verschieden ist von einem Punkt des ersten Endes 421a der ersten Berandungsseite 421. Dadurch wird eine zu der ersten Längskante 121 offene Aussparung 410 gebildet, Die Aussparung 410 bildet weiterhin durch diese Ausgestaltung einen Hinterschnitt 405, durch welchen das hakenförmige Befestigungselement 400 gebildet wird. Mit der zweiten Berandungsseite 422 liegt das hakenförmige Befestigungselement 400 auf einem Einhakelement 500 beim Herstellen der hakenförmigen Verbindung auf.

Die Erfindung stellt verschiedene Geometrien für die Aussparung 410 des hakenförmigen Befestigungselements 400 bereit, nämlich durch verschiedene Ausgestaltungen der Berandung 420.

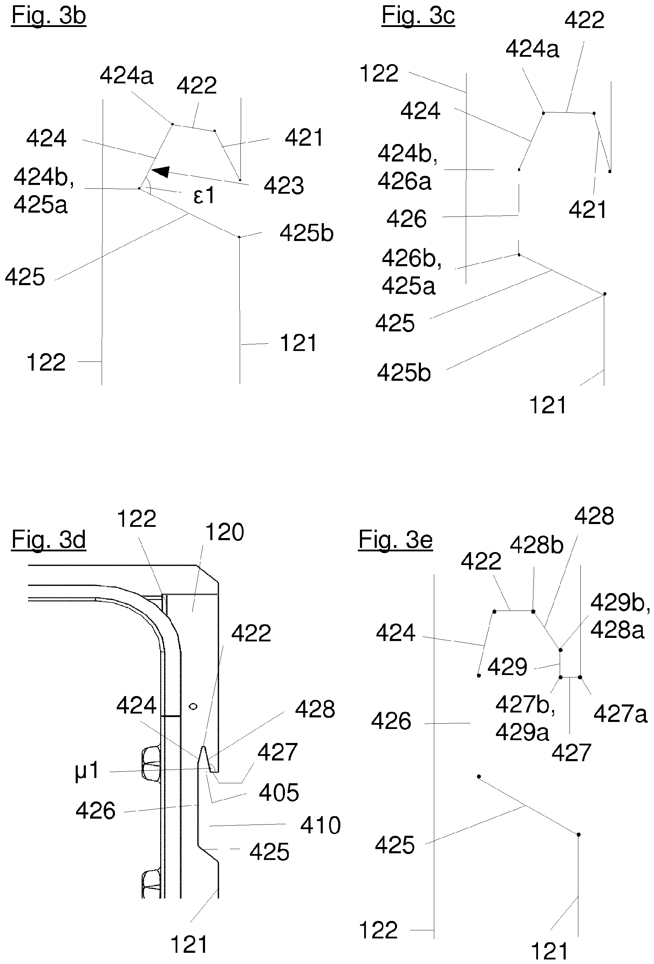

Das in Figur 3b dargestellte Ausführungsbeispiel unterscheidet sich von dem in Figur 3a dargestellten Ausführungsbeispiel dadurch, dass die dritte Berandungsseite 423 mehrere Abschnitte aufweisen kann. Beispielsweise ist die dritte Berandungsseite 423 in Figur 3b mit einem ersten Abschnitt 424 und einem zweiten Abschnitt 425 dargestellt, wobei der erste Abschnitt 424 und der zweite Abschnitt 425 einen Winkel ε1 einschließen, der kleiner als 90° sein kann. Ein erstes Ende 424a des ersten Abschnitts 424 ist an dem zweiten Ende 422b der zweiten Berandungsseite 422 angeordnet und ein zweites Ende 424b des ersten Abschnitts 424 ist an einem ersten Ende 425a des zweiten Abschnitts 425 angeordnet. Ein zweites Ende 425b des zweiten Abschnitts 425 ist an der ersten Längskante 121 des Blechstreifens 120 angeordnet.

Das in Figur 3c dargestellte Ausführungsbeispiel unterscheidet sich von dem in Figur 3b dargestellten Ausführungsbeispiel dadurch, dass zwischen dem ersten Abschnitt 424 und dem zweiten Abschnitt 425 der dritten Berandungsseite 423 ein dritter Abschnitt 426 angeordnet ist. Dabei ist ein erstes Ende 426a des dritten Abschnitts 426 an dem zweiten Ende 424b des zweiten Abschnitts 424 angeordnet und ein zweites Ende 426b des dritten Abschnitts 426 ist an dem ersten Ende 425a des zweiten Abschnitts 425 angeordnet. Der dritte Abschnitt 426 verläuft parallel zu der Längsachse 123 des Blechstreifens 120. In Abhängigkeit von einer Länge des dritten Abschnitts 426 kann eine Ausdehnung der Aussparung 410 in einer Richtung parallel zu der Längsachse 123 des Blechstreifens 120 variiert werden.

Das in Figur 3d dargestellte Ausführungsbeispiel unterscheidet sich von dem in Figur 3c dargestellten Ausführungsbeispiel dadurch, dass die erste Berandungsseite 421 einen ersten Abschnitt 427 und einen zweiten Abschnitt 428 aufweist. Ein erstes Ende 427a des ersten Abschnitts 427 ist an der ersten Längskante 121 des Blechstreifens 120 angeordnet und ein zweites Ende 427b des ersten Abschnitts 427 ist an einem ersten Ende 428a des zweiten Abschnitts 428 angeordnet. Der erste Abschnitt 427 ist in einem Winkel von im Wesentlichen 90° zu der Längsachse 123 des Blechstreifens 120 angeordnet. Der zweite Abschnitt 428 ist in einem Winkel µ1 zu dem ersten Abschnitt 427 angeordnet, der kleiner als 180° ist. Ein zweites Ende 428b des zweiten Abschnitts 428 ist an dem ersten Ende 422a der zweiten Berandungsseite 422 angeordnet. In diesem Ausführungsbeispiel verlaufen insbesondere die erste Berandungsseite 421 und der erste Abschnitt 424 der dritten Berandungsseite 423 in einem Winkel zu der Längsachse 123 und schließen jeweils mit der zweiten Berandungsseite 422 einen stumpfen Innenwinkel ein. Dadurch werden Freiflächen zu dem an der zweiten Berandungsseite 422 anliegenden Einhakelement 500 gebildet, welche Kontaktflächen verringern.

Die erste Berandungseite 421 kann auch mehr als zwei Abschnitte aufweisen. Das in Figur 3e gezeigte Ausführungsbeispiel unterscheidet sich von dem in Figur 3d dargestellten Ausführungsbeispiel dadurch, dass die erste Berandungsseite 421einen zusätzlichen dritten Abschnitt 429 aufweist, der zwischen dem ersten Abschnitt 427 und dem zweiten Abschnitt 428 der ersten Berandungsseite 421 angeordnet ist. Dabei ist ein erstes Ende 429a des dritten Abschnitts 429 an dem zweiten Ende 427b des ersten Abschnitts 427 angeordnet und ein zweites Ende 429b des dritten Abschnitts 429 an dem ersten Ende 428a des zweiten Abschnitts 428 angeordnet. Der dritte Abschnitt 429 ist parallel zu der der Längsachse 123 des Blechstreifens 120 angeordnet.

Ebenfalls liegt es im Rahmen der Erfindung, dass die Berandungsseiten der Aussparung 410 zumindest abschnittsweise gekrümmt ausgebildet sein können. Weiterhin können die Bereiche, in denen Abschnitte aneinanderstoßen, abgerundet ausgebildet sein.

Das Gegenstück zu dem hakenförmigen Befestigungselement 400 ist das Einhakelement 500, von welchem verschiedene Ausführungsbeispiele in den Figuren 4 und 5a bis 5e dargestellt sind. Das Einhakelement 500 wird durch einen Vorsprung 510 an den Blechstreifen 320, 330 gebildet.

Der Blechstreifen 320 weist zusätzlich zu einer zweiten Längskante 322, mit der er an dem Gehäuse in einem Winkel α2, welcher vorzugsweise im Wesentlichen 90° beträgt, angeordnet ist, eine erste Längskante 321 auf. Die zweite Längskante 322 ist parallel zu einer Längsachse 323 des Blechstreifens 320 angeordnet. Die erste Längskante 321 ist zumindest abschnittsweise parallel zu der Längsachse 323 des Blechstreifens 320 angeordnet. Der Blechstreifen 320 weist mehrere, beispielsweise vier, Vorsprünge 510 auf, von denen jeweils einer in den Figuren 5a bis 5f in verschiedenen Ausführungen gezeigt ist.

Jeder der Vorsprünge 510 weist eine Berandung 520 auf. Erfindungswesentlich ist, dass die Berandung 520 eine erste Berandungsseite 521, und eine zweite Berandungsseite 522 aufweist, vgl. Fig. 5a. Ein erstes Ende 521a der ersten Berandungsseite 521 ist dabei an der ersten Längskante 321 des Blechstreifens 320 angeordnet und ein zweites Ende 521b der ersten Berandungsseite 521 ist an einem ersten Ende 522a der zweiten 522 Berandungsseite angeordnet. Die erste Berandungsseite 521 ist zu der ersten Längskante 321 in einem ersten Winkel β2 angeordnet, der ein spitzer Winkel sein kann. Das zweite Ende 522b der zweiten Berandungsseite 522 ist an der ersten Längskante angeordnet, und zwar insbesondere in einem Punkt, der verschieden ist von einem Punkt, in dem das erste Ende 521a der ersten Berandungsseite 521 an der Längskante 321 angeordnet ist. Dadurch wird ein Einhakelement 500 gebildet, auf welches das hakenförmige Befestigungselement eingehakt werden kann.

Die Erfindung stellt außerdem verschiedene Geometrien für den Vorsprung 510 des Einhakelements 500 bereit, nämlich durch verschiedene Ausgestaltungen der Berandung 520.

Das in Figur 5b gezeigte Ausführungsbeispiel unterscheidet sich von dem in Figur 5a dargestellten Ausführungsbeispiel dadurch, dass die erste Berandungsseite 521 mehrere Abschnitte aufweisen kann. Beispielsweise ist die erste Berandungsseite 521 in Figur 5b mit einem ersten Abschnitt 527 und einem zweiten Abschnitt 528 dargestellt, wobei der erste Abschnitt 527 und der zweite Abschnitt 528 einen Winkel µ2 einschließen, der kleiner als 180° ist. Ein erstes Ende 527a des ersten Abschnitts 527 ist an der ersten Längskante 321 des Blechstreifens 320 angeordnet und ein zweite Ende 527b des ersten Abschnitts 527 ist an und einem ersten Ende 528a des zweiten Abschnitts 528 angeordnet. Ein zweites Ende 528b des zweiten Abschnitts 528 ist an dem ersten Ende der 522a der zweiten Berandungsseite 522 angeordnet. Der erste Abschnitt 527 ist insbesondere senkrecht zu der Längsachse 323 des Blechstreifens 320 angeordnet. Der erste Abschnitt 527 bildet eine Auflagefläche für das hakenförmige Befestigungselement 400. Ist der Winkel µ2 kleiner als 180°, aber größer als 90°, kann ein flächiger Kontakt des zweiten Abschnitts 528 mit dem hakenförmigen Befestigungselement 400 vermieden werden.

Das in Figur 5c gezeigte Ausführungsbeispiel unterscheidet sich von den in Figur 5b gezeigten Ausführungsbeispiel dadurch, dass zwischen dem ersten Abschnitt 527 und dem zweiten Abschnitt 528 der ersten Berandungsseite 521 ein dritter Abschnitt 529 angeordnet ist. Dabei ist ein erstes Ende 529a des dritten Abschnitts 529 an dem zweiten Ende 527b des ersten Abschnitts 527 angeordnet und ein zweites Ende 529b des dritten Abschnitts 529 an dem ersten Ende 528a des zweiten Abschnitts 528 angeordnet. Der dritte Abschnitt 529 ist also zwischen dem ersten Abschnitt 527 und dem zweiten Abschnitt 528 angeordnet. Der dritte Abschnitt 529 verläuft parallel zu der Längsachse 323 des Blechstreifens 320 und kann eine seitliche Stabilisierung des eingehakten hakenförmigen Befestigungselements 400 ermöglichen.

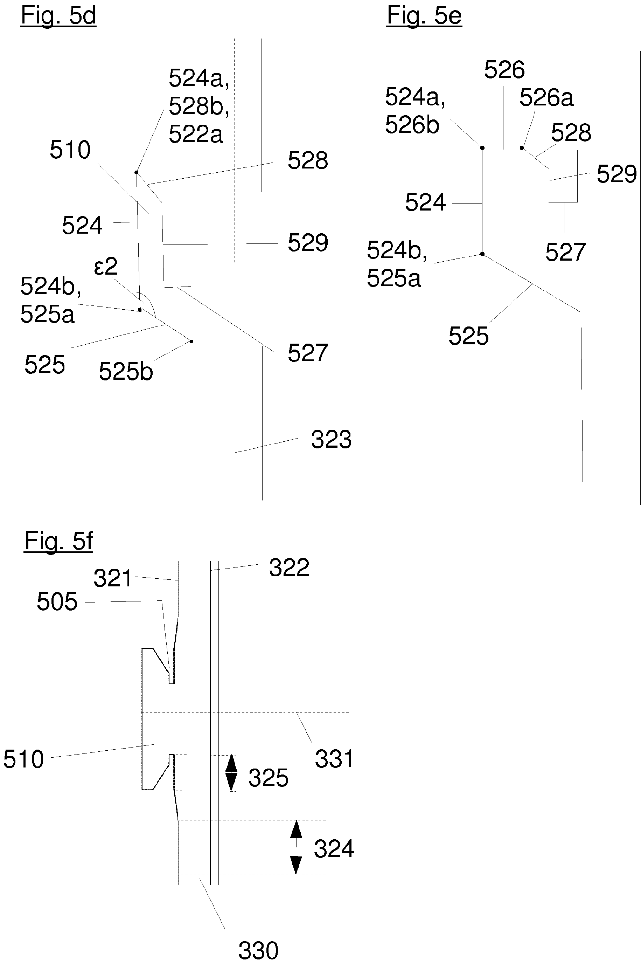

Das in Figur 5d gezeigte Ausführungsbeispiel unterscheidet sich von dem in Figur 5c dargestellten Ausführungsbeispiel dadurch, dass die zweite Berandungsseite 522 einen ersten Abschnitt 524 und einen zweiten Abschnitt 525 aufweist, die einen Winkel ε2, welcher kleiner als 180° ist, einschließen. Ein erstes Ende 524a des ersten Abschnitts 524 ist an dem ersten Ende 522a der zweiten Berandungsseite 522 angeordnet, das in Figur 5d auch das zweite Ende 528b des zweiten Abschnitts 528 der ersten Berandungsseite 521 ist. Ein zweites Ende 524b des ersten Abschnitts 524 ist an einem ersten Ende 525a des zweiten Abschnitts 525 angeordnet. Ein zweites Ende 525b des zweiten Abschnitts 525 ist an der Längskante 321 des Blechstreifens 320 angeordnet. Der erste Abschnitt 524 ist parallel zu der Längsachse 323 des Blechstreifens 320 angeordnet.

Das in Figur 5e gezeigte Ausführungsbeispiel unterscheidet sich von dem in Figur 5d dargestellten Ausführungsbeispiel dadurch, dass die zweite Berandungsseite 522 einen zusätzlichen dritten Abschnitt 526 auf, dessen erstes Ende 526a an dem ersten Ende 522a der zweiten Berandungsseite 522 angeordnet ist. Ein zweites Ende 526b des dritten Abschnitts 526 ist an dem ersten Ende 524a des ersten Abschnitts 524 angeordnet. Der dritte Abschnitt 526 ist insbesondere senkrecht zu der der Längsachse 323 des Blechstreifens 320 angeordnet und kann die Stabilität des freien Endes des Vorsprungs erhöhen.

Das Einhakelement 500 gemäß Figur 5f weist eine zu einer zur Längsachse 323 senkrecht angeordneten Querachse 331 symmetrische Form auf. Ein hakenförmiges Befestigungselement kann insbesondere aus zwei entgegengesetzten Richtungen in das Einhakelement 500 eingehakt werden.

Ebenfalls liegt es im Rahmen der Erfindung, dass die Berandungsseiten des Vorsprungs 510 zumindest abschnittsweise gekrümmt ausgebildet sein können. Weiterhin können die Bereiche, in denen Abschnitte aneinanderstoßen, abgerundet ausgebildet sein.

In einen Hinterschnitt 505 zwischen der ersten Berandungsseite 521 und der ersten Längskante 321 des Blechstreifens 320 greift der Haken des hakenförmigen Befestigungselements 400 ein.

In einer Ausführungsform weist die erste Längskante 321 des an dem Gehäuse 300 angeordneten Blechstreifens 320 wenigstens einen ersten Abschnitt 324 und wenigstens einen zweiten Abschnitt 325 auf, wobei an den zweiten Abschnitten 325 die Vorsprünge 510 angeordnet sind. Der Abstand des zweiten Abschnittes 325 der ersten Längskante 321zu der zweiten Längskante 322 des Blechstreifens 320 ist größer als der Abstand des ersten Abschnittes 324 der ersten Längskante 321 zu der zweiten Längskante 322. Diese Anordnung der beiden Abschnitte 324 und 325 bewirkt, dass das hakenförmige Befestigungselement 400 das Einhakelement 500 lediglich im zweiten Abschnitt 325 teilweise flächig kontaktiert, so dass die Kontaktfläche zwischen hakenförmigen Befestigungselement 400 und Einhakelement 500 weiter verringert werden kann.

In den dargestellten Ausführungsbeispielen sind die hakenförmigen Befestigungselemente 400 und die Einhakelemente 500 aus den jeweiligen Blechstreifen 120, 130 und 320, 330 ausgestanzt. Durch das Ausstanzen können die hakenförmigen Befestigungselemente 400 und die Einhakelemente 500 besonders einfach hergestellt werden.

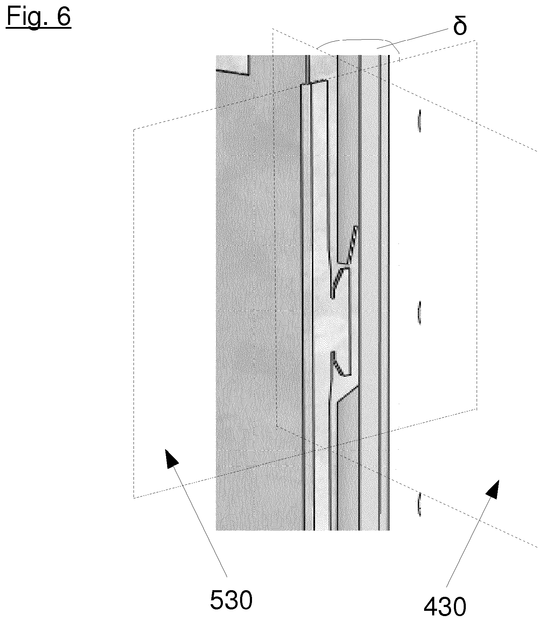

Die Blechstreifen 120 und 130 mit den hakenförmigen Befestigungselementen sind in einer Ebene 430 angeordnet, vgl. Figur 6. Die Blechstreifen 320 und 330 mit den Einhakelementen 500 sind in einer Ebene 530 angeordnet, wie in Figur 6 dargestellt. In einem montierten Zustand des Innenkessels 100 in dem Gehäuse 300 schließen die Ebenen 430 und 530 einen Winkel δ, vorzugsweise einen Winkel δ von 90°, ein.

### Bezugszeichenliste

- 100: Innenkessel
- 110: erste Seitenwand
- 112: zweite Seitenwand

- 120: Blechstreifen
- 121: erste Längskante
- 122: zweite Längskante
- 123: Längsachse
- 130: Blechstreifen

- 200: Simulationsschrank

- 300: Gehäuse
- 310: erste Seitenwand
- 312: zweite Seitenwand
- 313: dritte Seitenwand
- 314: erste Rahmenseite
- 315: zweite Rahmenseite

- 320: Blechstreifen
- 321: erste Längskante
- 322: zweite Längskante
- 323: Längsachse
- 324: erster Abschnitt
- 325: zweiter Abschnitt
- 330: Blechstreifen
- 331: Querachse

- 400: hakenförmiges Befestigungselement
- 405: Hinterschnitt
- 410: Aussparung

- 420: Berandung

- 421: erste Berandungsseite
- 421a: erstes Ende
- 421b: zweites Ende
- 427: erster Abschnitt
- 427a: erstes Ende
- 427b: zweites Ende
- 428: zweiter Abschnitt
- 428a: erstes Ende
- 428b: zweites Ende
- 429: dritter Abschnitt
- 429a: erstes Ende
- 429b: zweites Ende

- 422: zweite Berandungsseite
- 422a: erstes Ende
- 422b: zweites Ende

- 423: dritte Berandungsseite
- 423a: erstes Ende
- 423b: zweites Ende
- 424: erster Abschnitt
- 424a: erstes Ende
- 424b: zweites Ende
- 425: zweiter Abschnitt
- 425a: erstes Ende
- 425b: zweites Ende
- 426: dritter Abschnitt
- 426a: erstes Ende
- 426b: zweites Ende

- 430: Ebene

- 500: Einhakelement
- 505: Hinterschnitt
- 510: Vorsprung
- 520: Berandung

- 521: erste Berandungsseite
- 521a: erstes Ende
- 521b: zweites Ende
- 527: erster Abschnitt
- 527a: erstes Ende
- 527b: zweites Ende
- 528: zweiter Abschnitt
- 528a: erstes Ende
- 528b: zweites Ende
- 529: dritter Abschnitt
- 529a: erstes Ende
- 529b: zweites Ende

- 522: zweite Berandungsseite
- 522a: erstes Ende
- 522b: zweites Ende
- 524: erster Abschnitt
- 524a: erstes Ende
- 524b: zweites Ende
- 525: zweiter Abschnitt
- 525a: erstes Ende
- 525b: zweites Ende
- 526: dritter Abschnitt
- 526a: erstes Ende
- 526b: zweites Ende

- 530: Ebene

- α1: Winkel
- α2: Winkel
- β1: erster Winkel
- β2: erster Winkel
- γ1: zweiter Winkel
- δ: Winkel
- ε1: Winkel
- ε2: Winkel
- µ1: Winkel
- µ2: Winkel

## Patentansprüche

1. Innenkessel (100) eines Simulationsschranks (200), wobei an dem Innenkessel (100) wenigstens zwei hakenförmige Befestigungselemente (400) zum Befestigen an einem Gehäuse (300) des Simulationsschranks (200) angeordnet sind, wobei der Innenkessel (100) in Form eines Quaders einen Innenraum, fünf Seitenwände und eine Türseite aufweist, wobei an dem Innenkessel (100) wenigstens ein Blechstreifen (120) mit einer ersten Längskante (121) und einer zweiten Längskante (122) jeweils im Wesentlichen parallel zu einer Längsachse (123) des Blechstreifens (120) angeordnet ist, wobei der Blechstreifen (120) wenigstens eine, vorzugsweise mehrere, je eines der hakenförmigen Befestigungselemente (400) bildende Aussparung (410) aufweist, wobei die Aussparung (410) eine Berandung (420) aufweist mit wenigstens:
- einer ersten Berandungsseite (421) mit einem ersten Ende (421a) und einem zweiten Ende (421b),
- einer zweiten Berandungsseite (422) mit einem ersten Ende (422a) und einem zweiten Ende (422b),
- einer dritten Berandungsseite (423) mit einem ersten Ende (423a) und einem zweiten Ende (423b),
wobei
- das erste Ende (421a) der ersten Berandungsseite (421) an der ersten Längskante (121) des Blechstreifens (120) angeordnet ist und die erste Berandungsseite (421) in einem ersten Winkel (β1), welcher kleiner als oder gleich 90° ist, zu der ersten Längskante (121) angeordnet ist,
- das erste Ende (422a) der zweiten Berandungsseite (422) an dem zweiten Ende (421b) der ersten Berandungsseite (421) angeordnet ist und die zweite Berandungsseite (422) in einem zweiten Winkel (γ1), welcher kleiner als 180° ist, zu der ersten Berandungsseite (421), vorzugsweise im Wesentlichen senkrecht zu der Längsachse (121) des Blechstreifens (120), angeordnet ist, und
das erste Ende (423a) der dritten Berandungsseite (423) an dem zweiten Ende (422b) der zweiten Berandungsseite (422) angeordnet ist und das zweite Ende (423b) der dritten Berandungsseite (423) an der ersten Längskante (121) angeordnet ist,
wobei die dritte Berandungsseite (423) wenigstens
- einen ersten Abschnitt (424) mit einem ersten Ende (424a) und einem zweiten Ende (424b) und
- einen zweiten Abschnitt (425) mit einem ersten Ende (425a) und einem zweiten Ende (425b) aufweist,
wobei
- das erste Ende (424a) des ersten Abschnitts (424) an dem zweiten Ende (422b) der zweiten Berandungsseite (422) angeordnet ist,
- das zweite Ende (425b) des zweiten Abschnitts (425) an der ersten Längskante (121) angeordnet ist, und
- der erste Abschnitt (424) in einem Winkel (ε1), welcher kleiner als 180° ist, zu dem zweiten Abschnitt (425) angeordnet ist.

2. Innenkessel (100) nach Anspruch 1,
**dadurch gekennzeichnet, dass**
der Blechstreifen (120) in einem Winkel (α1) an dem Innenkessel (100) angeordnet ist, wobei vorzugsweise die zweite Längskante (122) des Blechstreifens (120) an dem Innenkessel (100) angeordnet ist und besonders vorzugsweise der Winkel (α1) im Wesentlichen 90° beträgt.

3. Innenkessel (100) nach einem der Ansprüche 1 oder 2,
**dadurch gekennzeichnet, dass**
der Blechstreifen (120) an einer ersten Seitenwand (110) des Innenkessels (100) und ein weiterer Blechstreifen (130) an einer der ersten Seitenwand (110) gegenüberliegenden zweiten Seitenwand (112) des Innenkessels (100) angeordnet sind.

4. Innenkessel (100) nach einem der Ansprüche 1 bis 3,
**dadurch gekennzeichnet, dass**
die erste Längskante (121) einen durch die Aussparung (410) gebildeten Hinterschnitt (405) aufweist.

5. Innenkessel (100) nach Anspruch 1,
**dadurch gekennzeichnet, dass**
die dritte Berandungsseite (424) einen dritten Abschnitt (426) mit einem ersten Ende (426a) und einem zweiten Ende (426b) aufweist, wobei das erste Ende (426a) des dritten Abschnitts (426) an dem zweiten Ende (424b) des ersten Abschnitts (424) angeordnet ist und das zweite Ende (426b) des dritten Abschnitts (426) an dem ersten Ende (425a) des zweiten Abschnitts (425) angeordnet ist, wobei vorzugsweise der dritte Abschnitt (426) der dritten Berandungsseite (424) im Wesentlichen parallel zur Längsachse (123) des Blechstreifens (120) angeordnet ist.

6. Innenkessel (100) nach einem der Ansprüche 1 bis 5,
**dadurch gekennzeichnet, dass**
die erste Berandungsseite (421) wenigstens
- einen ersten Abschnitt (427) mit einem ersten Ende (427a) und einem zweiten Ende (427b), und
- einen zweiten Abschnitt (428) mit einem ersten Ende (428a) und einem zweiten Ende (428b) aufweist,
wobei
- das erste Ende (427a) des ersten Abschnitts (427) an der ersten Längskante (121) des Blechstreifens (120) angeordnet ist,
- das zweite Ende (428b) des zweiten Abschnitts (428) an dem ersten Ende (422a) der zweiten Berandungsseite (422) angeordnet ist, und
- der erste Abschnitt (427) in einem Winkel (µ1), welcher kleiner als 180° ist, zu dem zweiten Abschnitt (428) angeordnet ist.

7. Innenkessel (100) nach Anspruch 6,
**dadurch gekennzeichnet, dass**
die erste Berandungsseite (421) einen dritten Abschnitt (429) mit einem ersten Ende (429a) und einem zweiten Ende (429b) aufweist, wobei das erste Ende (429a) des dritten Abschnitts (429) an dem zweiten Ende (427b) des ersten Abschnitts (427) angeordnet ist und das zweite Ende (429b) des dritten Abschnitts (429) an dem ersten Ende (428a) des zweiten Abschnitts (428) angeordnet ist, wobei vorzugsweise der dritte Abschnitt (429) der ersten Berandungsseite (421) im Wesentlichen parallel zur Längsachse (123) des Blechstreifens (120) angeordnet ist.

8. Simulationsschrank (200) mit einen Innenkessel (100) nach einem der vorangehenden Ansprüche und ein Gehäuse (300),
**dadurch gekennzeichnet, dass**
das Gehäuse (300) Einhakelemente (500) aufweist, in welche die hakenförmigen Befestigungselemente (400) einhakbar sind.

9. Simulationsschrank (200) nach Anspruch 8,
**dadurch gekennzeichnet, dass** an dem Gehäuse (300) wenigstens ein Blechstreifen (320) mit einer ersten Längskante (321) und einer zweite Längskante (322) jeweils im Wesentlichen parallel zu einer Längsachse (323) des Blechstreifens (320) angeordnet ist, wobei der Blechstreifen (320) wenigstens einen, vorzugsweise mehrere, je eines der Einhakelemente (500) bildenden Vorsprung (510) aufweist.

10. Simulationsschrank (200) nach Anspruch 9,
**dadurch gekennzeichnet, dass**
der Blechstreifen (320) in einem Winkel (α2) an dem Gehäuse (300) angeordnet ist, wobei vorzugsweise die zweite Längskante (322) des Blechstreifens (320) an dem Gehäuse (300) angeordnet ist und besonders vorzugsweise der Winkel (α2) im Wesentlichen 90° beträgt.

11. Simulationsschrank (200) nach einem der vorangehenden Ansprüche 9 oder 10,
**dadurch gekennzeichnet, dass**
der Blechstreifen (320) an einer ersten Seitenwand (312) des Gehäuses (300) und ein weiterer Blechstreifen (330) an einer der ersten Seitenwand (312) gegenüberliegenden zweiten Seitenwand (310) des Gehäuses (300) angeordnet sind.

12. Simulationsschrank (200) nach einem der vorangehenden Ansprüche 9 bis 11,
**dadurch gekennzeichnet, dass**
die erste Längskante (321) einen durch den Vorsprung (510) gebildeten Hinterschnitt (505) aufweist.

13. Simulationsschrank (200) nach einem der Ansprüche 9 bis 12,
**dadurch gekennzeichnet, dass**
der Vorsprung (510) eine Berandung (520) aufweist mit wenigstens:
- einer ersten Berandungsseite (521) mit einem ersten Ende (521a) und einem zweiten Ende (521b), und
- einer zweiten Berandungsseite (522) mit einem ersten Ende (522a) und einem zweiten Ende (522b),
wobei
- das erste Ende (521a) der ersten Berandungsseite (521) an der ersten Längskante (321) des Blechstreifens (320) angeordnet ist und die erste Berandungsseite (521) in einem ersten Winkel (β2), welcher kleiner als oder gleich 90° ist, zu der ersten Längskante (321) angeordnet ist,
- das erste Ende (522a) der zweiten Berandungsseite (522) an dem zweiten Ende (521b) der ersten Berandungsseite (521) angeordnet ist und das zweite Ende (522b) der zweiten Berandungsseite (522) an der ersten Längskante (321) angeordnet ist.

14. Simulationsschrank (200) nach Anspruch 13,
**dadurch gekennzeichnet, dass**
die erste Berandungsseite (521) wenigstens
- einen ersten Abschnitt (527) mit einem ersten Ende (527a) und einem zweiten Ende (527b), und
- einen zweiten Abschnitt (528) mit einem ersten Ende (528a) und einem zweiten Ende (528b) aufweist,
wobei
- das erste Ende (527a) des ersten Abschnitts (527) an der ersten Längskante (321) des Blechstreifens (320) angeordnet ist und das zweite Ende (527b) des ersten Abschnitts (527) an dem ersten Ende (528a) des zweiten Abschnitts (528) angeordnet ist, wobei der erste Abschnitt (527) vorzugsweise senkrecht zu der Längskante (321) des Blechstreifens (320) angeordnet ist,
- das zweite Ende (528b) des zweiten Abschnitts (528) an dem ersten Ende (522a) der zweiten Berandungsseite (522) angeordnet ist, und
- der erste Abschnitt (527) in einem Winkel (µ2), welcher kleiner als 180° ist, zu dem zweiten Abschnitt (528) angeordnet ist.

15. Simulationsschrank (200) nach einem der Ansprüche 13 oder 14,
**dadurch gekennzeichnet, dass**
die erste Berandungsseite (521) einen dritten Abschnitt (529) mit einem ersten Ende (529a) und einem zweiten Ende (529b) aufweist, wobei das erste Ende (529a) des dritten Abschnitts (529) an dem zweiten Ende (527b) des ersten Abschnitts (527) angeordnet ist und das zweite Ende (529b) des dritten Abschnitts (529) an dem ersten Ende (528a) des zweiten Abschnitts (528) angeordnet ist, wobei vorzugsweise der dritte Abschnitt (529) der ersten Berandungsseite (521) im Wesentlichen parallel zur Längsachse (323) des Blechstreifens (320) angeordnet ist.

16. Simulationsschrank (200) nach einem der Ansprüche 13 bis 15,
**dadurch gekennzeichnet, dass**
die zweite Berandungsseite (522) wenigstens
- einen ersten Abschnitt (524) mit einem ersten Ende (524a) und einem zweiten Ende (524b) und
- einen zweiten Abschnitt (525) mit einem ersten Ende (525a) und einem zweiten Ende (525b) aufweist,
wobei
- das erste Ende (524a) des ersten Abschnitts (524) an dem ersten Ende (522a) der zweiten Berandungsseite (522) angeordnet ist, wobei der erste Abschnitt (524) vorzugsweise parallel zu der Längsachse (323) des Blechstreifens (320) angeordnet ist, und
- das zweite Ende (525b) des zweiten Abschnitts (525) an der ersten Längskante (321) angeordnet ist, und
- der erste Abschnitt (524) in einem Winkel (ε2), welcher kleiner als 180° ist, zu dem zweiten Abschnitt (525) angeordnet ist.

17. Simulationsschrank (200) nach Anspruch 16,
**dadurch gekennzeichnet, dass**
die zweite Berandungsseite (522) einen dritten Abschnitt (526) mit einem ersten Ende (526a) und einem zweiten Ende (526b) aufweist, wobei das erste Ende (526a) des dritten Abschnitts (526) an dem ersten Ende (522a) der zweiten Berandungsseite (522) angeordnet ist und das zweite Ende (526b) des dritten Abschnitts (526) an dem ersten Ende (524a) des ersten Abschnitts (524) der zweiten Berandungsseite (522) angeordnet ist, wobei vorzugsweise der dritte Abschnitt (526) senkrecht zu der Längsachse (323) des Blechstreifens (320) angeordnet ist.

18. Simulationsschrank (200) nach einem der Ansprüche 8 bis 17,
**dadurch gekennzeichnet, dass**
das Gehäuse (300) wenigstens ein Einhakelement (500) aufweist, in welches das hakenförmige Befestigungselement (400) aus einer ersten Richtung einhakbar ist, und wenigstens ein zweites Einhakelement, in welches das hakenförmige Befestigungselement (400) aus einer zu der ersten Richtung entgegengesetzten zweiten Richtung einhakbar ist, wobei insbesondere das erste und das zweite Einhakelement (500) spiegelsymmetrisch zueinander ausgebildet sind.

19. Simulationsschrank (200) nach einem der Ansprüche 8 bis 18,
**dadurch gekennzeichnet, dass**
das Einhakelement (500) derart ausgebildet ist, dass das hakenförmige Befestigungselement (400) aus zwei entgegengesetzten Richtungen in das Einhakelement (500) einhakbar ist, insbesondere, dass das Einhakelement (500) eine zu einer zu der Längsachse (323) des Blechstreifens (320) senkrecht angeordneten Querachse (331) symmetrische Form aufweist.

20. Simulationsschrank (200) nach einem der Ansprüche 8 bis 19,
**dadurch gekennzeichnet, dass**
die erste Längskante (321) wenigstens einen ersten Abschnitt (324) aufweist, dessen Abstand zu der zweiten Längskante (322) kleiner ist als ein Abstand wenigstens eines zweiten Abschnittes (325) der ersten Längskante (321) zu der zweiten Längskante (322), wobei der Vorsprung (510) an dem zweiten Abschnitt (325) angeordnet ist.

21. Simulationsschrank (200) nach einem der Ansprüche 8 bis 18,
**dadurch gekennzeichnet, dass**
eine Ebene (530), in der das Einhakelement (500) liegt, mit einer Ebene (430), in der das hakenförmige Befestigungselementen (400) liegt, im eingehakten Zustand von dem hakenförmigen Befestigungselement (400) und dem Einhakelement (500) einen Winkel (δ), vorzugsweise einen Winkel (δ) von im Wesentlichen 90°, einschließt.

## Claims

1. Inner vessel (100) of a simulation chamber (200), wherein at least two hook-shaped attachment elements (400) are provided for attachment to a housing (300) of the simulation chamber (200), wherein the inner vessel (100), in the shape of a cube, comprises an inner space, five side walls and a door side, wherein at least one sheet metal strip (120) is arranged on the inner vessel (100) which has a first longitudinal edge (121) and a second longitudinal edge (122), each essentially parallel to a longitudinal axis (123) of the sheet metal strip (120), wherein the sheet metal strip (120) comprises at least one, preferably numerous, recesses (410), each of which forms one of the hook-shaped attachment elements (400), wherein the recess (410) comprises an edging (420) with at least:
- a first edging side (421) having a first end (421a) and a second end (421b),
- a second edging side (422) having a first end (422a) and a second end (422b),
- a third edging side (423) having a first end (423a) and a second end (423b), wherein
- the first end (421a) of the first edging side (421) is arranged on the first longitudinal edge (121) of the sheet metal strip (120) and the first edging side (421) is arranged at a first angle (β1) to the first longitudinal edge (121) which is smaller or equal to 90°,
- the first end (422a) of the second edging side (422) is arranged on the second end (421b) of the first edging side (421) and the second edging side (422) is arranged at a second angle (γ1), which is smaller than 180°, to the first edging side (421) and preferably essentially vertical relative to the longitudinal axis (121) of the sheet metal strip (120), and
the first end (423a) of the third edging side (423) is arranged on the second end (422b) of the second edging side (422) and the second end (423b) of the third edging side (423) is arranged on the first longitudinal edge (121),
wherein the third edging side (423) comprises at least
- a first segment (424) with a first end (424a) and a second end (424b) and
- a second segment (425) with a first end (425a) and a second end (425b),
wherein
- the first end (424a) of the first segment (424) is arranged on the second end (422b) of the second edging side (422),
- the second end (425b) of the second segment (425) is arranged on the first longitudinal edge (121), and
- the first segment (424) is arranged at an angle (ε1) relative to the second segment (425) which is smaller than 180°.

2. Inner vessel (100) in accordance with claim 1
**characterized in that**
the sheet metal strip (120) is arranged on the inner vessel (100) at an angle (α1), wherein the second longitudinal edge (122) of the sheet metal strip (120) is preferably arranged on the inner vessel (100) and, particularly preferably, the angle (α1) is essentially at 90°.

3. Inner vessel (100) in accordance with claim 1 or 2,
**characterized in that**
the sheet metal strip (120) is arranged on a first side wall (110) of the inner vessel (100) and a further sheet metal strip (130) is arranged on a second side wall (112) of the inner vessel (100) which lies opposite the first side wall (110).

4. Inner vessel (100) in accordance with any of claims 1 to 3,
**characterized in that**
the first longitudinal edge (121) comprises an undercut (405) formed by the recess (410).

5. Inner vessel (100) in accordance with claim 1,
**characterized in that**
the third edging side (424) comprises a third segment (426) with a first end (426a) and with a second end (426b), wherein the first end (426a) of the third segment (426) is arranged on the second end (426b) of the first segment (424) and the second end (426b) of the third segment (426) is arranged on the first end (425a) of the second segment (425), wherein preferably the third segment (426) of the third edging side (424) is arranged essentially parallel to the longitudinal axis (123) of the sheet metal strip (120).

6. Inner vessel (100) in accordance with any of claims 1 to 5,
**characterized in that**
the first edging side (421) comprises at least
- a first segment (427) with a first end (427a) and with a second end (427b), and
- a second segment (428) with a first end (428a) and with a second end (428b),
wherein
- the first end (427a) of the first segment (427) is arranged on the first longitudinal edge (121) of the sheet metal strip (120),
- the second end (428b) of the second segment (428) is arranged on the first end (422a) of the second edging side (422), and
- the first segment (427) is arranged at an angle (µ1) to the second segment (428) which is smaller than 180°.

7. Inner vessel (100) in accordance with claim 6,
**characterized in that**
the first edging side (421) comprises a third segment (429) with a first end (429a) and with a second end (429b), wherein the first end (429a) of the third segment (429) is arranged on the second end (427b) of the first segment (427) and the second end (429b) of the third segment (429) is arranged on the first end (428a) of the second segment (428), wherein preferably the third segment (429) of the first edging side (421) is arranged essentially parallel to the longitudinal axis (123) of the sheet metal strip (120).

8. Simulation chamber (200) having an inner vessel (100) in accordance with any of the preceding claims, and with a housing (300),
**characterized in that**
the housing (300) comprises hook-in elements (500) into which the hook-shaped attachment elements (400) can be hooked.

9. Simulation chamber (200) in accordance with claim 8
**characterized in that**
at least one sheet metal strip (320) having a first longitudinal edge and having a second longitudinal edge (322) is arranged on the housing (300) essentially parallel to a longitudinal axis (323) of the sheet metal strip (320), wherein the sheet metal strip (320) comprises at least one, preferably numerous, projections (510), each of which forms one of the hook-in element (500).

10. Simulation chamber (200) in accordance with claim 9,
**characterized in that**
the sheet metal strips (320) are arranged on the housing (300) at an angle (α2), wherein preferably the second longitudinal edge (322) of the sheet metal strip (320) is arranged on the housing (300) and, particularly preferably, the angle (α2) is essentially 90°.

11. Simulation chamber (200) in accordance with either of the preceding claims 9 or 10, **characterized in that**
the sheet metal strip (320) is arranged on a first side wall (312) of the housing (300) and **in that** a further sheet metal strip (330) is arranged on one of the second side walls (310) of the housing (300) that lie opposite the first side wall (312).

12. Simulation chamber (200) in accordance with any of the preceding claims 9 to 11, **characterized in that**
the first longitudinal edge (321) comprises an undercut (505) formed by the projection (510).

13. Simulation chamber (200) in accordance with any of claims 9 to 12,
**characterized in that**
the projection (510) comprises an edging (520) having at least:
- a first edging side (521) having a first end (521a) and having a second end (521b), and
- a second edging side (522) having a first end (522a) and having a second end (522b),
wherein
- the first end (521a) of the first edging side (521) is arranged on the first longitudinal edge (321) of the sheet metal strip (320) and the first edging side (521) is arranged at a first angle (β2) to the first longitudinal edge (321) which is smaller or equal to 90°,
- the first end (522a) of the second edging side (522) is arranged on the second end (521b) of the first edging side (521) and the second edge (522b) of the second edging side (522) is arranged on the first longitudinal edge (321).

14. Simulation chamber (200) in accordance with claim 13,
**characterized in that**
the first edging side (521) comprises at least
- a first segment (527) having a first end (527a) and having a second end (527b), and
- a second segment (528) having a first end (528a) and having a second end (528b),
wherein
- the first end (527a) of the first segment (527) is arranged on the first longitudinal edge (321) of the sheet metal strip (320) and the second end (527b) of the first segment (527) is arranged on the first end (528a) of the second segment (528), wherein the first segment (527) is preferably arranged vertically to the longitudinal edge (321) of the sheet metal strip (320),
- the second end (528b) of the second segment (528) is arranged on the first end (522a) of the second edging side (522), and
- the first segment (527) is arranged at an angle (µ2) to the second segment (528) which is smaller than 180°.

15. Simulation chamber (200) in accordance with either of claims 13 or 14,
**characterized in that**
the first edging side (521) comprises a third segment (529) with a first end (529a) and with a second end (529b), wherein the first end (529a) of the third segment (529) is arranged on the second end (527b) of the first segment (527) and the second end (529b) of the third segment (529) is arranged on the first end (528a) of the second segment (528), wherein preferably the third segment (529) of the first edging side (521) is arranged essentially parallel to the longitudinal axis (323) of the sheet metal strip (320).

16. Simulation chamber (200) in accordance with any of claims 13 to 15,
**characterized in that**
the second edging side (522) comprises at least
- a first segment (524) with a first end (524a) and with a second end (524b) and
- a second segment (525) with a first end (525a) and with a second end (525b),
wherein
- the first end (524a) of the first segment (524) is arranged on the first end (522a) of the second edging side (522), wherein the first segment (524) is preferably arranged parallel to the longitudinal axis (323) of the sheet metal strip (320), and
- the second end (525b) of the second segment (525) is arranged on the first longitudinal edge ((321), and
- the first segment (524) is arranged at an angle (ε2) to the second segment (525) which is smaller than 180°.

17. Simulation chamber (200) in accordance with claim 16,
**characterized in that**
the second edging side (522) comprises a third segment (526) with a first end (526a) and with a second end (526b), wherein the first end (526a) of the third segment (526) is arranged on the first end (522a) of the second edging side (522) and the second end (526b) of the third segment (526) is arranged on the first end (524a) of the first segment (524) of the second edging side (522), wherein preferably the third segment (526) is arranged vertically to the longitudinal axis (323) of the sheet metal strip (320).

18. Simulation chamber (200) in accordance with any of claims 8 to 17,
**characterized in that**
the housing (300) comprises at least one hook-in element (500) into which the hook-shaped attachment element (400) can be hooked from a first direction, and at least one second hook-in element into which the hook-shaped attachment element (400) can be hook from a second direction which is opposite the first direction, wherein in particular the first and the second hook-in elements (500) are implemented mirror-symmetrically to each other.

19. Simulation chamber (200) in accordance with any of claims 8 to 18,
**characterized in that**
the hook-in element (550) is implemented such that the hook-shaped attachment element (400) can be hooked into the hook-in element (500) from two opposite directions, in particular, **in that** the hook-in element (500) comprises a symmetrical shape arranged vertically to a transverse axis (331) arranged vertically to the longitudinal axis (323) of the sheet metal strip (320).

20. Simulation chamber (200) in accordance with any of claims 8 to 19,
**characterized in that**
the first longitudinal edge (321) comprises at least a first segment (324), the distance of which to the second longitudinal edge (322) is smaller than a distance of at least one second segment (325) of the first longitudinal edge (321) to the second longitudinal edge (322), wherein the projection (510) is arranged on the second segment (325).

21. Simulation chamber (200) in accordance with any of claims 8 to 18,
**characterized in that**
a plane (530) in which the hook-in element (500) lies, comes together, when the hook-in attachment element (400) and the hook-in element are in a hook-in state, at an angle (σ), preferably at an angle (σ) of essentially 90°.

## Revendications

1. Cuve intérieure (100) d'une armoire de simulation (200),
la cuve intérieure (100) comportant au moins deux éléments de fixation (400) en forme de crochet pour la fixation au boîtier (300) de l'armoire de simulation (200),
- la cuve intérieure (100) étant sous la forme d'un parallélépipède avec un volume intérieur, cinq parois latérales et un côté de porte,
- la cuve intérieure (100) ayant au moins une bande de tôle (120) avec une première arête longitudinale (121) et une seconde arête longitudinale (122), respectivement pratiquement parallèle à l'axe longitudinal (123) de la bande de tôle (120),
- la bande de tôle (120) a au moins un, et de préférence plusieurs évidements (410) formant chacun un élément de fixation (400) en forme de crochet,
- l'évidement (410) a un bord (420) avec au moins :
* un premier côté de bord (421) ayant une première extrémité (421a) et une seconde extrémité (421b),
* un second côté de bord (422) ayant une première extrémité (422a) et une seconde extrémité (422b),
* un troisième côté de bord (423) ayant une première extrémité (423a) et une seconde extrémité (423b),
dont
* la première extrémité (421a) du premier côté de bord (421) est prévue sur la première arête longitudinale (121) de la bande de tôle (120) et le premier côté de bord (421) fait avec la première arête longitudinale (121) un premier angle (β1) inférieur ou égal à 90°,
* la première extrémité (422a) du second côté de bord (422) est prévu à la seconde extrémité (421b) du premier côté de bord (421) et le second côté de bord (422) fait avec le premier côté de bord (421) un second angle (γ1) inférieur à 180°, de préférence pratiquement perpendiculaire à l'axe longitudinal (121) de la bande de tôle (120), et
* la première extrémité (423a) du troisième côté de bord (423) est prévue sur la seconde extrémité (422b) du second côté de bord (422) et la seconde extrémité (423b) du troisième côté de bord (423) est prévue sur la première arête longitudinale (121),
- le troisième côté de bord (423) a au moins :
un premier segment (424) avec une première extrémité (424a) et une seconde extrémité (424b), et
* un second segment (425) avec une première extrémité (425a) et une seconde extrémité (425b),
dont
* la première extrémité (424a) du premier segment (424) est prévue sur la seconde extrémité (422b) du second côté de bord (422),
* la seconde extrémité (425b) du second segment (425) est prévue sur la première arête longitudinale (121), et
* le premier segment (424) fait avec le second segment (425) un angle (ε1) inférieur à 180°.

2. Cuve intérieure (100) selon la revendication 1,
**caractérisée en ce que**
la bande de tôle (120) est prévue sur la cuve intérieure (100) avec un angle (□1), de préférence, la seconde arête longitudinale (122) de la bande de tôle (120) étant prévue sur la cuve intérieure (100) et d'une manière particulièrement préférentielle, l'angle (□1) est pratiquement égal à 90°.

3. Cuve intérieure (100) selon l'une des revendications 1 ou 2,
**caractérisée en ce que**
la bande de tôle (120) est prévue sur une première paroi latérale (110) de la cuve intérieure (100) et une autre bande de tôle (130) est prévue sur une seconde paroi latérale (112) à l'opposé de la première paroi latérale (110) de la cuve intérieure (100).

4. Cuve intérieure (100) selon l'une des revendications 1 à 3,
**caractérisée en ce que**
la première arête longitudinale (121) a une contredépouille (405) formée par l'évidement (410).

5. Cuve intérieure (100) selon la revendication 1,
**caractérisée en ce que**
le troisième côté de bord (424) a un troisième segment (426) avec une première extrémité (426a) et une seconde extrémité (426b),
la première extrémité (426a) du troisième segment (426) étant prévue sur la seconde extrémité (424b) du premier segment (424) et la seconde extrémité (426b) du troisième segment (426) étant prévue sur la première extrémité (425a) du second segment (425),
- de préférence, le troisième segment (426) du troisième côté de bord (424) est pratiquement parallèle à l'axe longitudinal (123) de la bande de tôle (120).

6. Cuve intérieure (100) selon l'une des revendications 1 à 5,
**caractérisée en ce que**
le premier côté de bord (421) a au moins :
- un premier segment (427) avec une première extrémité (427a) et une seconde extrémité (427b), et
- un second segment (428) avec une première extrémité (428a) et une seconde extrémité (428b),
dont
- la première extrémité (427a) du premier segment (427) est prévue sur la première arête longitudinale (121) de la bande de tôle (120),
- la seconde extrémité (428b) du second segment (428) est prévue sur la première extrémité (422a) du second côté de bord (422), et
- le premier segment (427) fait un angle (µ1) inférieur à 180° avec le second segment (428).

7. Cuve intérieure (100) selon la revendication 6,
**caractérisée en ce que**
le premier côté de bord (421) a un troisième segment (429) avec une première extrémité (429a) et une seconde extrémité (429b),
- la première extrémité (429a) du troisième segment (429) étant prévue sur la seconde extrémité (427b) du premier segment (427) et la seconde extrémité (429b) du troisième segment (429) étant prévue sur la première extrémité (428a) du second segment (428),
- de préférence, le troisième segment (429) du premier côté de bord (421) est prévu sur la bande de tôle (120) pratiquement de façon parallèle à l'axe longitudinal (123).

8. Armoire de simulation (200) munie d'une cuve intérieure (100) selon l'une des revendications précédentes et un boîtier (300),
**caractérisée en ce que**
le boîtier (300) comporte des éléments en forme de crochet (500) dans lesquels s'accrochent les éléments de fixation (400) en forme de crochet.

9. Armoire de simulation (200) selon la revendication 8,
**caractérisée en ce que**
le boîtier (300) comporte au moins une bande de tôle (320) avec une première arête longitudinale (321) et une seconde arête longitudinale (322) chacune pratiquement parallèle à l'axe longitudinal (323) de la bande de tôle (320),
- la bande de tôle (320) ayant au moins une, et de préférence plusieurs saillies (510) formant chacune un élément d'accrochage (500).

10. Armoire de simulation (200) selon la revendication 9,
**caractérisée en ce que**
la bande de tôle (320) fait un angle (□2) avec le boîtier (300),
de préférence la seconde arête longitudinale (322) de la bande de tôle (320) est prévue sur le boîtier (300) et de manière particulièrement préférentielle, l'angle (□2) est pratiquement égal à 90°.

11. Armoire de simulation (200) selon l'une des revendications 9 ou 10,
**caractérisée en ce que**
la bande de tôle (320) est prévue sur une première paroi latérale (312) du boîtier (300) et une autre bande de tôle (330) est prévue sur la seconde paroi (310) du boîtier (300) à l'opposé de la première paroi latérale (312).

12. Armoire de simulation (200) selon l'une des revendications 9 à 11,
**caractérisée en ce que**
la première arête longitudinale (321) a une contredépouille (505) formée par la saillie (510).

13. Armoire de simulation (200) selon l'une des revendications 9 à 12,
**caractérisée en ce que**
la saillie (510) a un bord (520) avec au moins :
- un premier côté de bord (521) ayant une première extrémité (521a) et une seconde extrémité (521b), et
- un second côté de bord (522) avec une première extrémité (522a) et une seconde extrémité (522b),
dont
la première extrémité (521a) du premier côté de bord (521) est prévue sur la première arête longitudinale (321) de la bande de tôle (320) et le premier côté de bord (521) est prévu avec un premier angle (β2) inférieur ou égal à 90° par rapport à l'arête longitudinale (321),
- la première extrémité (522a) de la seconde bande de tôle (522) est prévue sur la seconde extrémité (521b) du premier côté de bord (521) et la seconde extrémité (522b) du second côté de bord (522) est prévue sur la première arête longitudinale (321).

14. Armoire de simulation (200) selon la revendication 13,
**caractérisée en ce que**
le premier côté de bord (521) comporte au moins :
- un premier segment (527) avec une première extrémité (527a) et une seconde extrémité (527b),
- un second segment (528) avec une première extrémité (528a) et une seconde extrémité (528b),
dont
la première extrémité (527a) du premier segment (527) est prévue sur la première arête longitudinale (321) de la première bande de tôle (320) et la seconde extrémité (527b) du premier segment (527) est prévue sur la première extrémité (528a) du second segment (528),
- le premier segment (527) étant de préférence perpendiculaire à l'arête longitudinale (321) de la bande de tôle (320),
- la seconde extrémité (528b) du second segment (528) est prévue sur la première extrémité (522a) de la seconde bande de tôle (522), et
- le premier segment (527) fait un angle (µ2) inférieur à 180° par rapport au second segment (528).

15. Armoire de simulation (200) selon l'une des revendications 13 ou 14,
**caractérisée en ce que**
le premier côté de bord (521) a un troisième segment (529) avec une première extrémité (529a) et une seconde extrémité (529b),
* la première extrémité (529a) du troisième segment (529) est prévue sur la seconde extrémité (527b) du premier segment (527) et la seconde extrémité (529b) du troisième segment (529) est prévue sur la première extrémité (528a) du second segment (528),
- de préférence, le troisième segment (529) du premier côté de bord (521) est pratiquement parallèle à l'axe longitudinal (323) de la bande de tôle (320).

16. Armoire de simulation (200) selon l'une des revendications 13 à 15,
**caractérisée en ce que**
le second côté de bord (522) comporte au moins :
- un premier segment (524) avec une première extrémité (524a) et une seconde extrémité (524b), et
- un second segment (525) avec une première extrémité (525a) et une seconde extrémité (525b),
dont
- la première extrémité (524a) du premier segment (524) est prévue sur la première extrémité (522a) du second côté de bord (522),
* le premier segment (524) étant monté de préférence parallèlement à l'axe longitudinal (323) de la bande de tôle (320), et
- la seconde extrémité (525b) du second segment (525) est prévue sur la première arête longitudinale (321), et
- le premier segment (524) fait un angle (ε2) inférieur à 180° avec le second segment (525).

17. Armoire de simulation (200) selon la revendication 16,
**caractérisée en ce que**
le second côté de bord (522) a un troisième segment (526) avec une première extrémité (526a) et une seconde extrémité (526b),
* la première extrémité (526a) du troisième segment (526) étant prévue sur la première extrémité (522a) du second côté de bord (522) et la seconde extrémité (526b) du troisième segment (526) est prévue sur la première extrémité (524a) du premier segment (524) du premier côté de bord (522),
* de préférence, le troisième segment (526) est perpendiculaire à l'axe longitudinal (323) de la bande de tôle (320).

18. Armoire de simulation (200) selon l'une des revendications 8 à 17,
**caractérisée en ce que**
le boîtier (300) a au moins un élément de crochet (500) dans lequel peut s'accrocher l'élément de fixation (400) en forme de crochet selon une première direction et au moins un second élément d'accrochage dans lequel peut s'accrocher l'élément de fixation (400) en forme de crochet à partir d'une seconde direction opposée à la première direction, notamment le premier et le second élément de crochet (500) étant symétriques plan l'un par rapport à l'autre.

19. Armoire de simulation (200) selon l'une des revendications 8 à 18,
**caractérisée en ce que**
l'élément d'accrochage (500) est réalisé de façon que l'élément de fixation (400) en forme de crochet puisse être accroché dans l'élément d'accrochage (500) dans deux directions opposées, notamment pour que l'élément d'accrochage (500) présente une forme symétrique par rapport à l'axe transversal (331) perpendiculaire à l'axe longitudinal (323) de la bande de tôle (320).

20. Armoire de simulation (200) selon l'une des revendications 8 à 19,
**caractérisée en ce que**
la première arête longitudinale (321) a au moins un premier segment (324) dont la distance par rapport à la seconde arête longitudinale (322) est inférieure à la distance d'au moins un second segment (325) par rapport à la première arête longitudinale (321) avec la seconde arête longitudinale (322), la saillie (510) se trouvant dans le second segment (325).

21. Armoire de simulation (200) selon l'une des revendications 8 à 18,
**caractérisée en ce que**
le plan (530) dans lequel se trouve l'élément d'accrochage (500) fait un angle (δ), de préférence un angle (δ) pratiquement égal à 90° avec un plan (430) dans lequel se trouve l'élément de fixation en forme de crochet (400), à l'état accroché par l'élément de fixation en forme de crochet (400) et l'élément de crochet (500).
